# EUROPEAN PATENT APPLICATION

(11) **EP 2 544 337 A1**
(43) Date of publication of application: **09.01.2013**
(21) Application number: 11750632.9
(22) Date of filing: 01.03.2011
(51) Int. Cl.: H02K 1/28

(54) **DRIVE MOTOR FOR AN ELECTRIC VEHICLE**

(30) Priority: 04.03.2010 JP 2010047791
(71) Applicant: NTN Corporation, Osaka-shi, Osaka 550-0003 (JP)
(72) Inventor: OZAKI, Takayoshi, Iwata-shi Shizuoka 438-0037 (JP); MAKINO, Yusuke, Iwata-shi Shizuoka 438-0037 (JP); OKADA, Koichi, Iwata-shi Shizuoka 438-0037 (JP)
(74) Representative: Sokolowski, Fabian
(86) International application number: PCT/JP2011/054588
(87) International publication number: WO 2011/108522

(57) **Abstract**

A drive motor for an electric vehicle is an IPM motor including a motor rotor (25), which is made up of a rotor core portion (29) having an inner peripheral surface, which is mounted externally on a rotary output shaft (24) and which is round in sectional shape, and a permanent magnet (30) disposed within the rotor core portion (29). At a circumferential position which will become proximate to a site of the permanent magnet (30), displaced towards an outer diametric side of the rotor core portion (29), an inner peripheral surface of the rotor core portion (29) and an outer peripheral surface of the rotary output shaft are provided with respective non-round shaped portions (29a, 24a) of a circular shape in section, which form respective parts of a detention or arresting unit (31) for arresting the motor rotor (25) from rotating relative to the rotary output shaft (24).

## Description

### CROSS REFERENCE TO THE RELATED APPLICATION

This application is based on and claims Convention priority to Japanese patent application No. 2010-047791, filed March 4, 2010, the entire disclosure of which is herein incorporated by reference as a part of this application.

### BACKGROUND OF THE INVENTION

### (Field of the Invention)

The present invention relates to a drive motor for an electrically powered automotive vehicle, which may be used as an electric in-wheel motor built in a wheel of the automotive vehicle.

### (Description of Related Art)

If a vehicle drive motor and/or a controller for controlling the vehicle drive motor, both employed in the electrically powered automotive vehicle, or electric vehicle for short, fail to operate, the outcome would be a fatal situation that takes place, and, accordingly, those failures should be absolutely avoided in terms of the reliability. It is quite often that the drive motor employed in the electric vehicle is used in the form of an IPM (Interior Permanent Magnet) motor. The IPM motor makes use of permanent magnets built in the motor rotor core and, therefore, littering of the permanent magnets can be avoided on one hand, but on the other hand the motor rotor core requires perforations to be formed therein for accommodating the respective permanent magnets and this tends to lead to the reduction in centrifugal strength of the motor rotor.

On the other hand, in the drive motor for the electric vehicle, the efficiency thereof is the biggest concern. Accordingly, in order to maximize the efficiency, the phase of an electric current flowing across each coil wound around the motor stator is meticulously controlled by the phase of rotation of the motor rotor. In such case, to achieve the meticulous control of the electric current flowing across each coil, the accuracy of information on the rotational angle phase between the motor rotor and the motor stator is of prime importance and, accordingly, detention or arresting of the motor rotor relative to a rotary output shaft is essential for this purpose.

### [Prior Art Literature]

[Patent Document 1] JP Laid-open Patent Publication No. 2008-168790

In the case of the IPM motor used as the drive motor for the electric vehicle, a plurality of permanent magnets built in the rotor core is arranged in a concentric circle to form a serrated configuration. For this reason, the wall thickness as measured in a radial direction from an inner peripheral surface of a rotor core member to each of the permanent magnets varies depending on the circumferential position. In view of this, in order to secure a sufficient strength at the peripheral position at which the wall thickness is the smallest, it becomes necessary to set the radial wall thickness of the rotor core member in its entirety to a somewhat large value. In particular, where means is employed to arrest the motor rotor from rotating relative to the rotary output shaft of the motor as described previously, there is the possibility that from the aspect of securing the strength, the radial wall thickness of the rotor core will further increase. However, setting the radial wall thickness of the rotor core member in itself to a large value is undesirable from the aspect of the natural vibration of rotary bending of the motor rotary output shaft system to which the motor rotor is fixed.

### SUMMARY OF THE INVENTION

In view of the foregoing, an object of the present invention is to provide a drive motor for an electrically powered automotive vehicle, the motor rotor can be arrested from rotating relative to the rotary output shaft without the radial dimension of the motor rotor being increased.

The drive motor for the electric vehicle, which is designed in accordance with the present invention, is a drive motor for an electrically powered automotive vehicle, which includes a motor rotor comprising a rotor core portion having an inner peripheral surface of a round shape in section and mounted externally on a rotary output shaft, and a permanent magnet disposed inside the rotor core portion; at a circumferential position proximate to a site of the permanent magnet, which is offset in a direction radially outwardly of the rotor core portion, first and second non-round shaped portions of a non-round shape in section, which cooperate with each other to form an arresting unit for arresting the motor rotor from rotating relative to the rotary output shaft, being provided respectively in the inner peripheral surface of the rotor core portion and an outer peripheral surface of the rotary output shaft. In the present invention, for example, the use is made of a plurality of permanent magnets, in which case, in a transverse section of the motor rotor, are arranged so as to represent a serrated shape extending in a direction circumferentially of the motor rotor.

According to the above described construction, since the inner peripheral surface of the rotor core portion and the outer peripheral surface of the rotary output shaft are formed with the respective non-round shaped portions of the non-round shape in section, which form respective parts of the detention or arresting unit for arresting the motor rotor from rotating relative to the rotary output shaft, it is possible to avoid a rotational displacement of the motor rotor relative to the rotary output shaft. Accordingly, any undesirable change in output torque resulting from the deviation of the phase of the electric current to be supplied to each coil because of the displacement in position can be avoided and the motor efficiency can be maintained at the maximum value. In particular, the non-round shaped portions referred to above are provided at the respective circumferential positions which will become the positions in the vicinity of the site of the permanent magnets displaced towards the outer diametric side of the rotor core portion and, thus, the non-round shaped portion comes to be provided in the inner peripheral surface of the rotor core portion at the circumferential position at which the radial wall thickness from the inner peripheral surface of the rotor core portion to the permanent magnets is largest. For this reason, there is no need to further increase the radial wall thickness of the rotor core portion for the sole purpose of securing the centrifugal strength and, hence, the motor rotor can have a minimal required outer diameter. For this reason, without unduly increasing the outer diametric dimension of the motor rotor, the motor rotor can be arrested from rotating relative to the rotary output shaft. Also, since no outer diametric dimension of the motor rotor need be increased, there is no problem associated with the rotary bending natural vibration of the rotary output shaft system of the motor.

In the present invention, the first and second non-round shaped portions of the rotor core portion and the rotary output shaft may be in the form of flat surfaces, which are parallel to an axial direction and perpendicular to a radial direction and which are adapted to be mated with each other. The use of the flat surfaces is effective to avoid a notch effect and also to make it further hard for the strength to lower which would otherwise occur when the non-round shaped portions are employed.

In the present invention, the first and second non-round shaped portions of the rotor core and the rotary output shaft may be of recessed and projected shapes, respectively, the recessed and projected shapes extending in the axial direction. By way of example, the first non-round shaped portion of the rotor core portion may be in the form of a projection protruding towards an inner diametric side, in which case the second non-round shaped portion of the rotary output shaft is in the form of a recess depressed towards the inner diametric side and is engageable with the projection. Alternatively, the non-round shaped portion of the rotor core portion may be in the form of a recess depressed towards an outer diametric side, in which case the second non-round shaped portion of the rotary output shaft is in the form of a projection protruding towards the outer diametric side and is engageable with the recess. If the non-round shaped portions represent respective recessing and projecting shapes extending in the axial direction, a work can be facilitated to make the non-rounded shaped portions to be engaged with each other by means of a mounting work of the rotor core portion and the rotary output shaft and, also, a firm detention or arresting effect can be obtained.

The first non-rounded shaped portion of the rotor core portion may be in the form of a first recess depressed towards an outer diametric side and the second non-round shaped portion of the rotary output shaft is preferably in the form of a second recess depressed towards an inner diametric side, and the additional use may be made of a key engageable with the first and second recesses to cooperate with the first and second recesses to define the arresting unit for arresting the motor rotor from rotating relative to the rotary output shaft. If the non-round shaped portions are in the form of the respective recesses, it is easy to process the non-round shaped portions.

In the present invention, the drive motor may be an in-wheel motor of a type incorporated in a wheel. With this drive motor, since the provision of the detention or arresting unit for arresting the motor rotor from rotating makes it possible to avoid the increase of the outer diametric dimension of the motor, it can readily be accommodated within the wheel even when the drive motor is used as the in-wheel motor.

In the present invention, an output of the drive motor may be transmitted to a wheel through a reduction gear unit. Where the output of the motor is transmitted to the vehicle wheel through the reduction gear unit as described above, if the fixing position of the motor rotor displaces relative to the rotary output shaft, a change of the torque of the motor resulting therefrom is amplified and then transmitted to the vehicle wheel. Even in this case, since the drive motor is provided with the detention or arresting unit for arresting the motor rotor from rotating and the change in torque resulting from the displacement in position of the motor rotor is avoided, it is possible to avoid the possibility that the change in torque may, after having been amplified, be transmitted to the vehicle wheel through the reduction gear unit.

In the present invention, the reduction gear unit may be in the form of a cycloidal gear device. Since the cycloidal gear unit has a high reduction gear ratio, compactization of the drive motor is possible. In this drive motor, the provision of the detention or arresting unit for arresting the motor rotor from rotating does not result in increase of the motor outer diametric dimension and, therefore, the compactization thereof is not hampered.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view showing a wheel support bearing assembly having mounted thereon a drive motor for an electrically powered vehicle, which is designed in accordance with a preferred embodiment of the present invention;
Fig. 2 is a cross sectional view taken along the line II-II in Fig. 1, showing a reduction gear unit;
Fig. 3 is a fragmentary sectional view showing on an enlarged scale, an important portion of the reduction gear unit shown in Fig. 2;
Fig. 4 is a cross sectional view taken along the line IV-IV in Fig. 1, showing the drive motor;
Fig. 5 is a view similar to Fig. 2, showing the drive motor designed in accordance with a second preferred embodiment of the present invention;
Fig. 6 is a view similar to Fig. 2, showing the drive motor designed in accordance with a third preferred embodiment of the present invention; and
Fig. 7 is a view similar to Fig. 2, showing the drive motor designed in accordance with a fourth preferred embodiment of the present invention.

### DESCRIPTION OF THE PREFERRED EMBODIMENTS

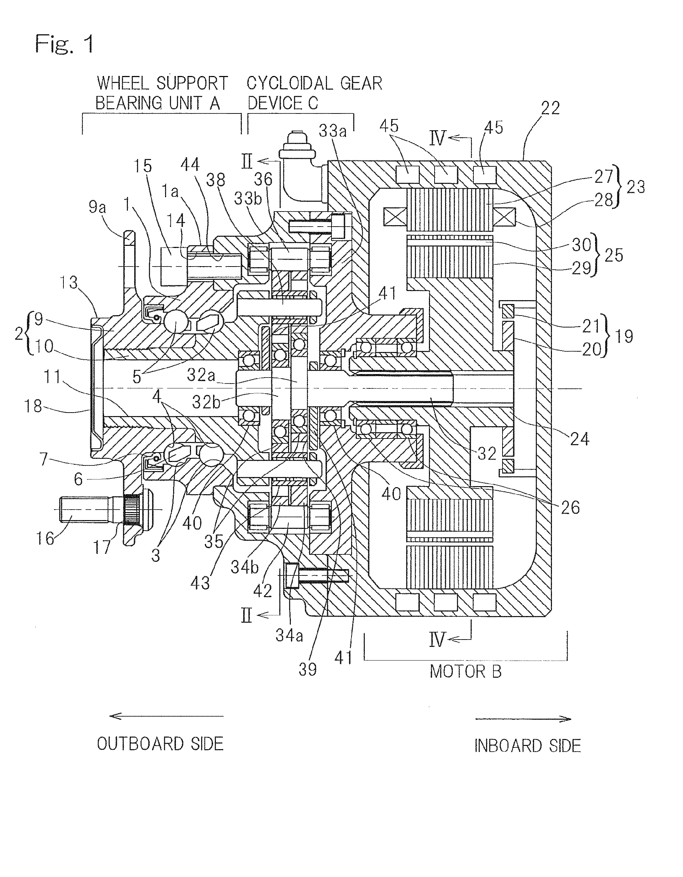

Figs. 1 to 4 illustrates a first preferred embodiment of the present invention. In particular, Fig. 1 illustrates a longitudinal sectional view of a wheel support bearing assembly incorporating therein a drive motor for an electric vehicle designed in accordance with the first preferred embodiment of the present invention. The wheel support bearing assembly shown therein is a wheel support bearing assembly of an in-wheel motor incorporated type, in which a reduction gear unit C is interposed between a wheel support bearing unit A for the automotive vehicle and the drive motor B according to the first embodiment of the present invention and a hub for a vehicle drive wheel, supported by the wheel support bearing unit A, and a rotary output shaft 24 of the drive motor B are coaxially connected with each other. The reduction gear unit C is a cycloidal gear device of a structure, in which a rotary input shaft 32 drivingly coupled coaxially with the rotary output shaft 24 of the drive motor B is formed with eccentric portions 32a and 32b and curvilinear plates 34a and 34b are mounted respectively on the eccentric portions 32a and 32b through corresponding bearing units 35 so that eccentric motions of those curvilinear plates 34a and 34b can be transmitted as a rotational motion to the wheel support bearing unit A.

It is to be noted that hereinafter in this specification, terms "outboard" and "inboard" represent one side of the vehicle body away from the longitudinal center of the vehicle body and the other side of the vehicle body close to the longitudinal center of the vehicle body, respectively, when assembled in the vehicle body.

The wheel support bearing unit A includes an outer member 1 having an inner periphery formed with a plurality of rows of rolling surfaces 3, an inner member 2 having an outer periphery formed with rolling surfaces 4 held in face to face relation to those rolling surfaces 3, and a plurality of rows of rolling elements 5 that are interposed between the rolling surfaces 3 in the outer member 1 and the rolling surfaces 4 in the inner member 2. The inner member 2 concurrently serves as a hub on which the vehicle drive wheel is mounted.

The wheel support bearing unit 4 referred to above is rendered to be a double row angular contact ball bearing, in which the rolling elements 5 are employed in the form of balls that are rollingly retained by a ball retainer 6 employed for each row. The rolling surfaces 3 and 4 referred to above are of an arcuately sectioned configuration and are so formed as to have respective contact angles held in back-to-back relation with each other. An annular bearing space is delimited between the outer member 1 and the inner member 2 positioned inside the outer member 1, and an outboard open end of the annular bearing space so delimited is sealed by a sealing member 7.

The outer member 1 is of a kind that is rendered to be a stationary raceway ring and is also rendered to be of one piece construction having a flange 1a to be fitted to a housing 33b on the outboard side of the reduction gear unit C. This flange 1a has a bolt insertion hole 14 defined at a plurality of circumferential locations thereof. Also, the housing 33b is provided with a bolt threading hole 44, having an inner periphery helically threaded, at locations alignable with the bolt insertion holes 14. When a mounting bolt 15 inserted through the bolt insertion hole 14 is threadingly engaged in the bolt threading hole 44, the outer member 1 is fitted to the housing 33b.

The inner member 2 is of a kind that is rendered to be a rotatable raceway ring and includes an outboard member 9 having a hub flange 9a for the support of an automotive wheel and an inboard member 10 having an outboard side, mounted on an inner periphery of the outboard member 9, and integrated together with the outboard member 9 by means of crimping. The rolling surfaces 4 of each row are formed in the outboard member 9 and the inboard member 10, respectively.

The inboard member 10 has its center provided with a center bore 11. The hub flange 9a is provided with a press fitting hole 17 at a plurality of circumferential locations for receiving therein a corresponding hub bolt 16. A cylindrical pilot portion 13 for guiding the automotive drive wheel and a brake component (both not shown) is defined in the vicinity of a root portion of the hub flange 9a in the outboard member 9 so as to protrude towards the outboard side. This pilot portion 13 has an inner periphery to which a cap 18 is fitted for closing an outboard opening of the center bore 11.

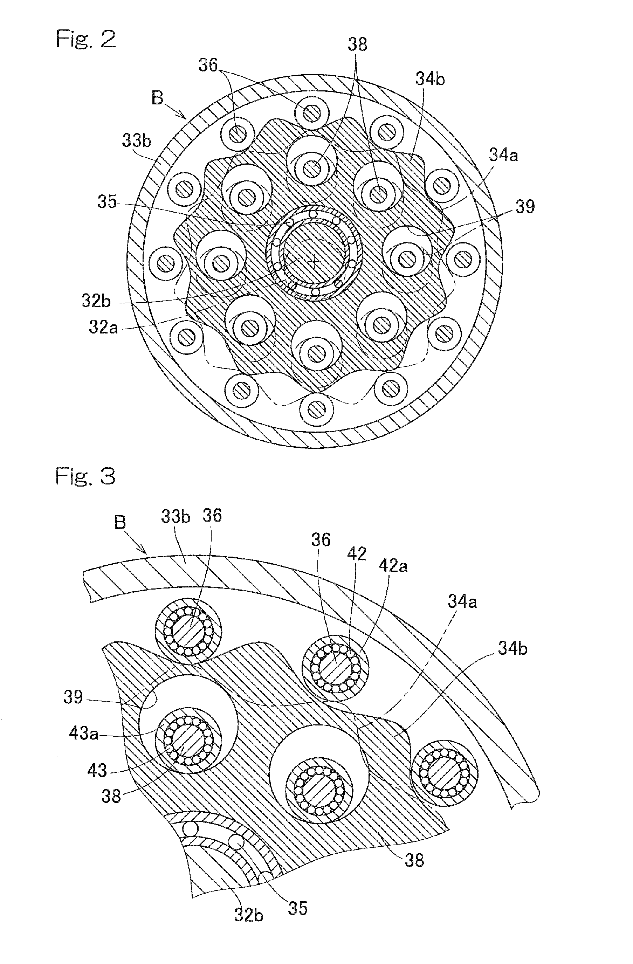

The reduction gear unit C is a cycloidal gear device as hereinabove described, and the two curvilinear plates 34a and 34b, each being of a contour depicted by the smoothly corrugated trochoidal curve as shown in Fig. 2, are mounted on the respective eccentric portions 32a and 32b of the rotary input shaft 32 through the respective bearings 35. A plurality of outer pins 36 for guiding the respective eccentric motions of the curvilinear plates 34a and 34b on an outer peripheral side are fitted at their opposite ends to the housing 33b, and a plurality of inner pins 38 fitted to the inboard member 10 of the inner member 2 are engaged having been inserted in a corresponding number of round sectioned throughholes 39 defined inside each of the curvilinear plates 34a and 34b.

It is to be noted that the contour of each of the curvilinear plates 34a and 34b may be that depicted by the cycloidal curve. In any event, the term "cycloidal gear device" referred hereinbefore and hereinafter referred to in this specification is to be understood as meaning a reduction gear device of a type including the curved plates 34a and 34b, each having the contour of each of the curvilinear plates 34a and 34b is that depicted by the trochoidal curve or the cycloidal curve, and the outer and inner pins 36 and 38.

The rotary input shaft 32 referred to above is fitted by spline to the rotary output shaft 24 of the drive motor B and is therefore rotatable together with the latter. The rotary input shaft 32 referred to above is rotatably supported by the inboard side housing 33a and an inner diametric surface of the inboard member 10 of the inner member 2 through axially spaced two bearing units 40.

As the rotary output shaft 24 of the drive motor B rotates, the curvilinear plates 34a and 34b mounted on the rotary input shaft 32 that is integrally rotatable together therewith undergo respective eccentric motions. These eccentric motions of the curvilinear plates 34a and 34b are transmitted as a rotational motion to the inner member 2 by engaging of the inner pins 38 and the throughholes 39. The rotation of the inner member 2 becomes reduced in speed relative to the rotation of the rotary output shaft 24. By way of example, the one step cycloidal gear device is effective to provide the reduction gear ratio of 10 or higher.

The two curvilinear plates 34a and 34b are mounted on the eccentric portions 32a and 32b of the rotary input shaft 32, respectively, having been offset 180° in phase relative to each other so that those eccentric motions can be counterbalanced with each other, while a counterweight 41 is mounted on both sides of each of the eccentric portions 32a and 32b and is displaced in a direction counter to the direction of eccentricity of the associated eccentric portion 32a and 32b so that vibrations induced by the eccentric motion of each of the curvilinear plates 34a and 34b can be counterbalanced.

As shown on an enlarged scale in Fig. 3, the outer pins 36 have respective bearing units 42 mounted thereon and the inner pins 38 similar have respective bearing units 43 mounted thereon, and those bearing units 42 and 43 includes outer rings 42a and 43a that are held in rolling contact with the outer peripheries of the curvilinear plates 34a and 34b and inner peripheries of the throughholes 39, respectively. Accordingly, the respective eccentric motions of the curvilinear plates 34a and 34b can be smoothly transmitted as the rotational motion to the inner member 2 while the resistance of contact between the outer pins 36 and the outer peripheries of the curvilinear plates 34a and 34b and the resistance of contact between the inner pins 38 and the inner peripheries of the throughholes 39 are reduced.

The drive motor B is an IPM (that is, Interior Permanent Magnet) motor of a radial gap type, in which a radial gap is provided between a motor stator 23, fixed to the cylindrical motor housing 22, and a motor rotor 25 fitted to the rotary output shaft 24. The rotary output shaft 24 is supported in a cantilever fashion by a cylindrical portion of the a housing 33a on the inboard side of the reduction gear unit C through two, axially spaced bearing units 26. Also, a peripheral wall portion of the motor housing 22 is provided with a cooling liquid passage 45. With a lubricant oil or a water soluble cooling agent flowing through this cooling liquid passage 45, cooling of the motor stator 23 takes place.

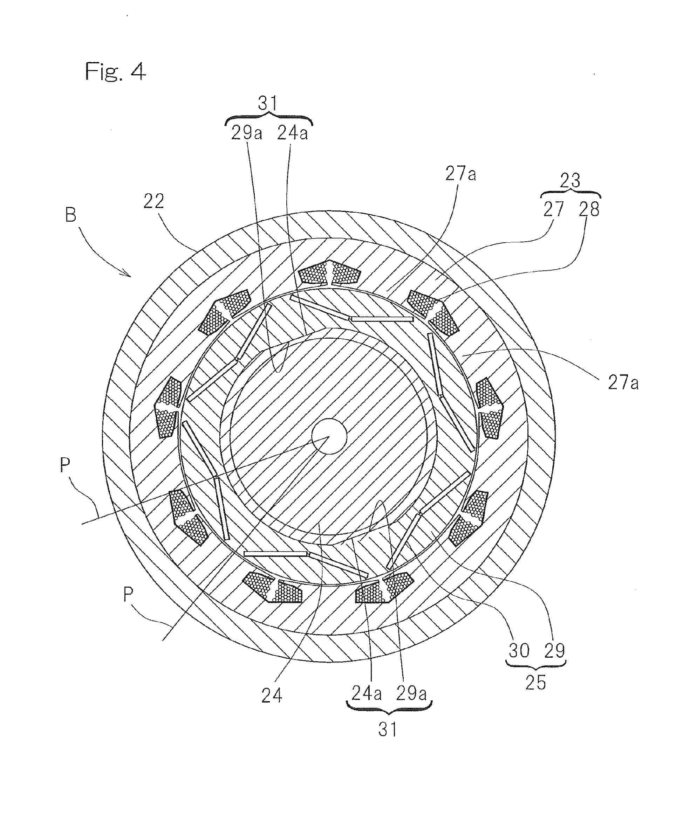

As shown in Fig. 4 in a cross sectional view taken along the line IV-IV in Fig. 1, the motor stator 23 includes a stator core portion 27, made of a soft magnetic material, and coils 28. The stator core portion 27 is of a ring shape, in which an outer peripheral surface thereof has a round shape in section, and a plurality of teeth 27a each protruding radially towards an inner diametric side are formed in an inner peripheral surface of the stator core portion 27 so as to assume respective teeth spaced in a circumferential direction. Each of the coils 28 is wound around the corresponding tooth 27a of the stator core portion 27. The stator core portion 27 has its outer peripheral surface mounted on an inner peripheral surface of the motor housing 22 and is therefore retained by the motor housing 22.

The motor rotor 25 includes a rotor core portion 29 of a ring shape and having a round-sectioned inner peripheral surface, which portion 29 is adapted to be mounted externally on the rotary output shaft 24 in coaxial relation with the motor stator 23, and a plurality of permanent magnets 30 built or embedded in the rotor core portion 25. Each of the permanent magnets 30 is in the form of a flat plate disposed parallel to a shaft axis or longitudinal axis of the motor rotor 25. Those permanent magnets 30 are disposed in a circular row coaxial with the motor rotor 25 so as to represent a serrated shape. In other words, the neighboring permanent magnets are spaced a somewhat distance from each other and are radially inclined in the same direction relative to the radial plane P positioned intermediate within the gap between the neighboring permanent magnets and containing the shaft axis, wherefore the permanent magnets as a whole represents the serrated shape extending in and along the circumferential direction. For this reason, the wall thickness between the inner peripheral surface of the rotor core portion 29 to the permanent magnets 30 varies depending on the circumferential position.

The inner peripheral surface of the rotor core portion 29 is provided at a circumferential position (two circumferentially 180° spaced positions in the instance now under discussion) proximate to a site of the permanent magnet 30, which is offset in a direction radially outwardly of the rotor core portion 29, with a non-round shaped portion 29a of a non-round shape in section. Also, the outer peripheral surface of the rotary output shaft 24 is also provided at the same circumferential position with a non-round shaped portion 24a of the non-round shape in section. Those non-round shape portions 24a and 29a are so shaped as to mesh with each other to thereby form a detention or arresting unit 31 by which the motor rotor 25 is incapable of rotationally displacing relative to the rotary output shaft 24.

It is to be noted that the term "non-round shape in section" referred to hereinbefore and hereinafter in the specification hereby presented is intended to means that, for example in the case of the rotor core portion 29, a portion of a sectionally round inner peripheral surface, i.e., an inner peripheral surface having a round shape in section, is not an arcuate shape forming a part of the round shape. This equally applied to the case of the rotary output shaft 24.

In the practice of the embodiment now under discussion, the non-round shaped portion 24a of the rotary output shaft 24 is formed by cutting out a part of the outer peripheral surface of the rotary output shaft 24 to form a flat surface parallel to the shaft direction (longitudinal direction) and perpendicular to the radial direction, whereas the non-round shaped portion 29a of the rotor core portion 29 is formed as a flat surface similar to the above described flat surface. With respect to the respective circumferential positions, at which the non-round shaped portions 24a and 29a, forming respective parts of the detention or arresting unit 31, are provided, the circumferential position in the case of the rotor core portion 29 is a position where the radial wall thickness from the inner peripheral surface thereof to the permanent magnets 30 is largest, and even though the non-round shaped portion 29a is provided in that inner peripheral surface, there is no possibility that the centrifugal strength of the motor rotor 25 will not be lowered. Accordingly, the provision of the non-round shaped portion 29 is effective to eliminate the necessity of setting the radial wall thickness of the rotor core portion 29 to a further increased value for the purpose of securing the centrifugal strength. Where each of the non-round shaped portions 24a and 29a is in the form of a flat surface as described hereinabove, with respect to the rotary output shaft 24, in which the non-round shaped portion 29a is formed on a recessed side, a notch effect will not occur, thereby the reduction in strength by the formation of the non-round shaped portion 29a is minimal.

As shown in Fig. 1, the drive motor B is provided with an angle sensor 19 for detecting the rotational phase of the motor rotor 25. This angle sensor 19 is made up of a to-be-detected member 20, provided on the outer peripheral surface of the rotary output shaft 24, and a detecting member 21 provided in the motor housing 22 in face to face relation with and proximate to the to-be-detected member 20 in, for example, a radial direction. For this angle sensor 19, a resolver, for example, is employed. In this drive motor B, in order to maximize the efficiency thereof, the phase of an electric current supplied across each coil 28 of the motor stator 23 is controlled by a motor controller (not shown) on the basis of the rotational phase of the motor rotor 25 detected by the angle sensor 19.

As hereinbefore described, the drive motor B for the electric vehicle is an IPM motor of the type utilizing the motor rotor 25, which is provided with the rotor core portion 29 having the inner peripheral surface of the round shape in section, which is mounted externally on the rotary output shaft 24, and the permanent magnets 30 disposed within the rotor core portion 25, in which at the circumferential position proximate to the site of the permanent magnet 30, which is offset in the direction radially outwardly of the rotor core portion 29, the inner peripheral surface of the rotor core portion 29 and the outer peripheral surface of the rotary output shaft 24 are provided respectively with the non-round shaped portions 24a and 29a of the non-round shape in section, which form respective parts of the detention or arresting unit 31 for arresting the motor rotor 25 from rotating relative to the rotary output shaft 24. In this case, considering that at the circumferential position at which the radial wall thickness from the inner peripheral surface of the rotor core portion 29 to the permanent magnets 30 is largest, the inner peripheral surface of the rotor core portion 29 is provided with the non-round shaped portion 29a, there is no need to set the radial wall thickness of the rotor core portion 29 to be increased for the purpose of securing the centrifugal strength and the outer diameter of the motor rotor 25 will not become large. For this reason, with no need to increase the outer diametric dimension of the motor rotor 25, the motor rotor 25 can be arrested from rotating relative to the rotary output shaft 24. Also, since the outer diametric dimension of the motor rotor 25 will not become large, there is no problem associated with the rotary bending natural vibration of the rotary output shaft 24 system.

Accordingly, it is possible to avoid the possibility that the phase of the electric current to be supplied across each coil 28 may displace because of the instable detection performed by the angle sensor 19 brought about as a result of displacement in position of the motor rotor 25, accompanied by the change in output torque, and the efficiency can be maintained at a maximized value. In particular, where as is the case with the wheel support bearing assembly shown in Fig. 1, the output of the drive motor B is transmitted to the drive wheel through the reduction gear unit C having a high reduction gear ratio, the change in torque in the drive motor B is, after having been amplified, transmitted to the vehicle drive wheel, but since the change in output torque in the drive motor B can be avoided as hereinbefore described, the occurrence of the torque change in the vehicle drive wheel can be avoided. Also, even the provision of the detention or arresting unit 31 for arresting the rotation of the motor rotor 25 in the drive motor B will not result in the increase of the motor outer diametric dimension and, therefore, even if it is used as an in-wheel motor such as shown in Fig. 1, it can be snugly and neatly accommodated within the vehicle wheel.

Also, where the reduction gear unit C is a cycloidal gear device, since it has a high reduction gear ratio, compactization of the drive motor B can be accomplished. Since in this drive motor B as well, the provision of the detention or arresting unit 31 does not result in the increase of the motor outer diametric dimension, the compactization thereof is in no way hampered.

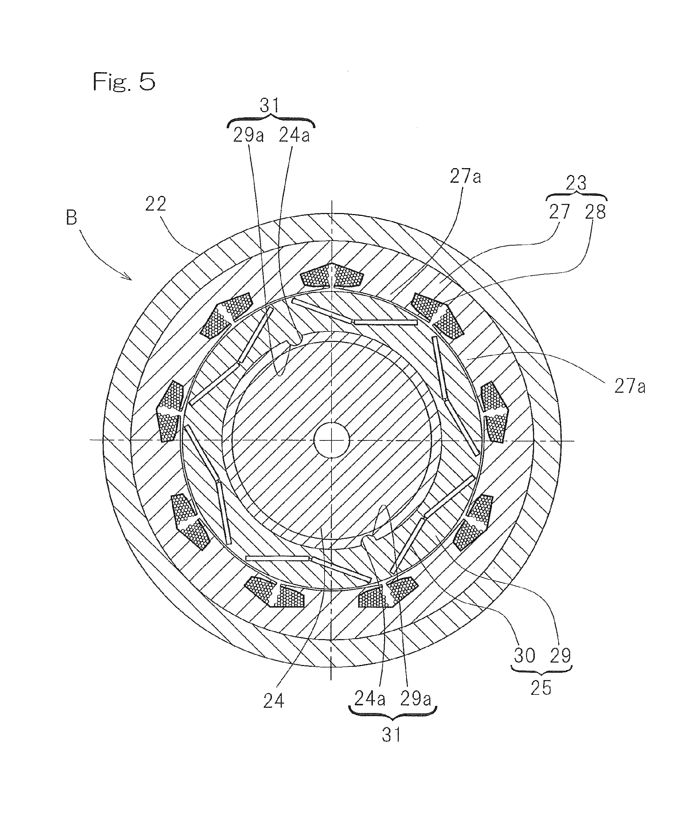

Fig. 5 illustrates a second preferred embodiment of the present invention. The drive motor B for the electric vehicle is similar to that shown in and described with reference to Figs. 1 to 4 in connection with the first preferred embodiment of the present invention, but differs therefrom in that the non-round shaped portion 29a in the inner peripheral surface of the rotor core portion 29 of the motor rotor 25 is made in the form of a projection of a radially inwardly protruding shape and, on the other hand, the non-round shaped portion 24a in the outer peripheral surface of the rotary output shaft 24 is radially inwardly depressed to define a radially inward recess of a grooved shape engageable with the projection, thereby forming the detention or arresting unit 31 for arresting the motor rotor 25 from rotating. The non-round shaped portion 29a in the form of the projection of the radially inwardly protruding shape and the non-round shaped portion 24a in the form of the recess of the grooved shape are provided over the entire width of respective mounting surfaces of the motor rotor 25 and the rotary output shaft 24 so as to extend in the axial direction. Other functions and effects thereof than those afforded are similar to those of the first embodiment shown in and described with particular reference to Figs. 1 to 4.

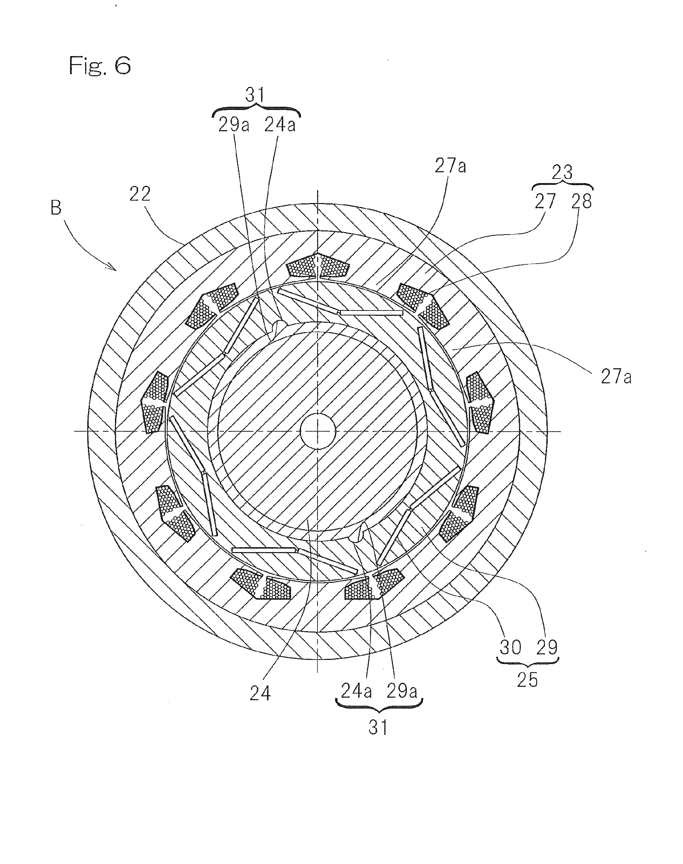

A third preferred embodiment of the present invention is shown in Fig. 6. The drive motor B for the electric vehicle according to this embodiment is similar to that shown in and described with reference to Fig. 4 in connection with the first embodiment of the present invention, but differs therefrom in that the non-round shaped portion 29a in the inner peripheral surface of the rotor core portion 29 of the motor rotor 25 is radially outwardly depressed to define a radially outward recess of a grooved shape and, on the other hand, the non-round shaped portion 24a in the outer peripheral surface of the rotary output shaft 24 is made in the form of a projection of a radially outwardly protruding shape, to thereby forming the detention or arresting unit 31 for arresting the motor rotor 25 from rotating. Other functions and effects thereof than those afforded are similar to those of the first embodiment shown in and described with particular reference to Figs. 1 to 4.

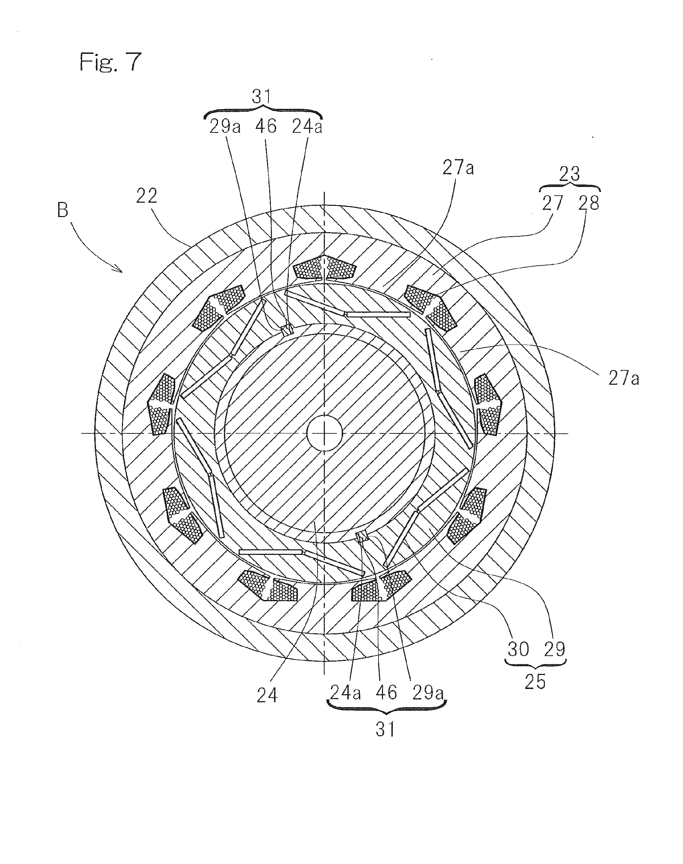

Fig. 7 illustrates a fourth preferred embodiment of the present invention. The drive motor B for the electric vehicle is similar to that shown in and described with reference to Fig. 4 in connection with the first embodiment of the present invention, but differs therefrom in that the non-round shaped portion 29a in the inner peripheral surface of the rotor core portion 29 of the motor rotor 25 is radially outwardly depressed to define a radially outward recess of a grooved shape and the non-round shaped portion 24a in the outer peripheral surface of the rotary output shaft 24 is made in the form of a radially inward recess of a grooved shape, and, at the same time, the use is separately made of a key 46 engageable in both of the radially outward recess and the radially inward recess, such that the non-round shaped portions 24a and 29b represented by the respective recesses and the key 46 may cooperate with each other to form the detention or arresting unit 31 for arresting the motor rotor 25 from rotating relative to the rotary output shaft 24. Other functions and effects thereof than those afforded are similar to those of the first embodiment shown in and described with particular reference to Figs. 1 to 4.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 24: Rotary output shaft
- 24a: Non-round shaped portion
- 25: Motor rotor
- 29: Rotor core portion
- 29a: Non-round shaped portion
- 30: Permanent magnet
- 31: Detention or arresting unit
- 46: Key
- B: Drive motor
- C: Reduction gear unit

## Claims

1. A drive motor for an electrically powered automotive vehicle comprises:
a motor rotor comprising a rotor core portion having an inner peripheral surface of a round shape in section and mounted externally on a rotary output shaft, and a permanent magnet disposed inside the rotor core portion;
at a circumferential position proximate to a site of the permanent magnet, which is offset in a direction radially outwardly of the rotor core portion, first and second non-round shaped portions of a non-round shape in section, which cooperate with each other to form an arresting unit for arresting the motor rotor from rotating relative to the rotary output shaft, being provided respectively in the inner peripheral surface of the rotor core portion and an outer peripheral surface of the rotary output shaft.

2. The drive motor for the electrically powered automotive vehicle as claimed in claim 1, which comprises a plurality of permanent magnets, which, in a transverse section of the motor rotor, are arranged so as to represent a serrated shape extending in a direction circumferentially of the motor rotor.

3. The drive motor for the electrically powered automotive vehicle as claimed in claim 1, in which the first and second non-round shaped portions of the rotor core portion and the rotary output shaft are in the form of flat surfaces, which are parallel to an axial direction and perpendicular to a radial direction and which are adapted to be mated with each other.

4. The drive motor for the electrically powered automotive vehicle as claimed in claim 1, in which the first and second non-round shaped portions of the rotor core and the rotary output shaft are of recessed and projected shapes, respectively, the recessed and projected shapes extending in the axial direction.

5. The drive motor for the electrically powered automotive vehicle as claimed in claim 4, in which the first non-round shaped portion of the rotor core portion is in the form of a projection protruding towards an inner diametric side and the second non-round shaped portion of the rotary output shaft is in the form of a recess depressed towards the inner diametric side and is engageable with the projection.

6. The drive motor for the electrically powered automotive vehicle as claimed in claim 4, in which the non-round shaped portion of the rotor core portion is in the form of a recess depressed towards an outer diametric side and the second non-round shaped portion of the rotary output shaft is in the form of a projection protruding towards the outer diametric side and is engageable with the recess.

7. The drive motor for the electrically powered automotive vehicle as claimed in claim 4, in which the first non-rounded shaped portion of the rotor core portion is in the form of a first recess depressed towards an outer diametric side and the second non-round shaped portion of the rotary output shaft is in the form of a second recess depressed towards an inner diametric side, and further comprising a key engageable with the first and second recesses to cooperate with the first and second recesses to define the arresting unit for arresting the motor rotor from rotating relative to the rotary output shaft.

8. The drive motor for the electrically powered automotive vehicle as claimed in claim 1, in which the drive motor is an in-wheel motor of a type incorporated in a wheel.

9. The drive motor for the electrically powered automotive vehicle as claimed in claim 1, in which an output of the drive motor is transmitted to a wheel through a reduction gear unit.

10. The drive motor for the electrically powered automotive vehicle as claimed in claim 9, in which the reduction gear unit is in the form of a cycloidal gear device.
